# EUROPÄISCHE PATENTSCHRIFT

(11) **EP 1 388 654 B1**
(45) Veröffentlichungstag und Bekanntmachung des Hinweises auf die Patenterteilung: **16.02.2005**
(21) Anmeldenummer: 03016861.1
(22) Anmeldetag: 24.07.2003
(51) Int. Cl.: F02B 37/007, F02B 39/10

(54) **Aufgeladene Brennkraftmaschine**
Charged internal combustion engine
Moteur à combustion interne suralimenté

(30) Priorität: 03.08.2002 DE 10235701
(43) Veröffentlichungstag der Anmeldung: 11.02.2004
(73) Patentinhaber: Udo Mailänder GmbH, D-74321 Bietigheim-Bissingen (DE)
(72) Erfinder: Mailänder, Udo, 74321 Bietigheim-Bissingen (DE)
(74) Vertreter: Schiering, Hans, Dipl.-Ing.

(56) Entgegenhaltungen:
- EP-A- 0 492 272
- WO-A-99/17008
- GB-A- 815 387
- US-A- 4 453 381

## Beschreibung

Die Erfindung bezieht sich auf eine aufgeladene Brennkraftmaschine mit einem Abgassammler und einem Ladeluftsammler jeweils für sämtliche Brennräume, mehreren in Abhängigkeit von der Leistung der Brennkraftmaschine gestaffelt mit ihrer Abgasturbine an den Abgassammler anschaltbaren und abschaltbaren Abgasturboladern und mit einem dem Verdichter eines der Abgasturbolader in Serie vorgeschalteten, von einem gesonderten Motor angetriebenen Ladegebläse.

Durch die Zuhilfenahme der Aufladung läßt sich in einem kleinen Verbrennungsmotor die Leistung eines ansonsten erheblich größeren Verbrennungsmotors verwirklichen. Im Falle einer vorgegebenen Nennleistung kann der Motor aufgrund seiner Aufladung beträchtlich verkleinert werden. Bei der Aufladung von Verbrennungsmotoren mit Abgasturboladern ergibt sich der Zielkonflikt, daß einerseits durch die Aufladung eine Steigerung der Nennleistung ermöglicht wird und andererseits dazu die geometrisch-mechanische Verdichtung proportional zur gewünschten Nennleistungssteigerung herabgesetzt werden muß. Durch die Herabsetzung der geometrisch-mechanischen Verdichtung läßt aber die Leistung bzw. das Drehmoment des aufgeladenen Verbrennungsmotors im unteren Drehzahlbereich überproportional nach, was auf die bei Abgasturboladern sehr spitzige Leistungskurve in ihrem eigenen Betriebsdrehzahldiagramm zurückzuführen ist. Eine Strömungsmaschine kann nur innerhalb eines sehr schmalen Drehzahlbereichs eine optimale Strömung und damit eine hohe Leistung erbringen. Das ist das Gegenteil dessen, was man beim Verbrennungsmotor in Landfahrzeugen für die Darstellung einer Zugkrafthyperbel anstrebt. Durch den Einsatz mehrerer Abgasturbolader kann jedoch sowohl die Betriebsdrehzahlspanne des Verbrennungsmotors als auch die spezielle volumetrische Arbeitsgröße des Abgasturboladers aufgeteilt werden. Das demzufolge zeitlich versetzte Hinzuschalten der Abgasturbolader führt allerdings leicht das Aufladesystem in den Bereich des Pumpens und zum Zusammenbruch der Ladeluftströmung im hinzugeschalteten Verdichter, wenn beispielsweise die vom zweiten Verdichter mit sehr geringem Druck zunächst über ein Abblaseventil ins Freie strömende Luft in den bereits unter dem vollen Druck des ersten Verdichters stehenden Ladeluftsammler des Verbrennungsmotors gelangen soll, also von einer Strömungsmaschine mit relativ großer Strömungsgeschwindigkeit und geringer Druckaufbaumöglichkeit zu einer Kolbenmaschine mit relativ kleiner Strömungsgeschwindigkeit und relativ hoher Druckaufbaumöglichkeit.

Mechanische Verdrängerlader, die vom Verbrennungsmotor selbst oder von einem gesonderten Motor angetrieben sein können, fördern leicht die für den Leerlauf des Verbrennungsmotors benötigte Luft, können aber im Hochlast-Hochdrehzahl-Bereich des Verbrennungsmotors nicht mit einem Abgasturbolader konkurrieren. Deshalb ist es üblich, an einer Brennkraftmaschine die jeweiligen Vorteile eines Abgasturboladers und eines Verdränger-Kompressors durch eine Serienschaltung oder eine Parallelschaltung der beiden Lader zu kombinieren. Dies gilt insbesondere zur Bekämpfung des sogenannten Turbolochs, welches entsteht, wenn beim Anlaufen des Verbrennungsmotors ein alleiniger oder erster Abgasturbolader wegen des schleppend ansteigenden Abgasaufkommens nur langsam auf Touren kommt.

Aus der Publikation GB 815 387 A ist ein Aufladesystem für eine Brennkraftmaschine bekannt, welches den Schwachbereich eines Paares aus zwei abgasseitig und ladeluftseitig zueinander parallelen Abgasturboladern durch ein dem Abgasturbolader-Paar ladeluftseitig in Serie vorgeschaltetes Hilfs-Ladegebläse überspielt, wobei als gesonderter Antrieb des Hilfs-Ladegebläses vorzugsweise ein Elektromotor vorgesehen ist und rückwärtige Ladeluftverluste über die Ansaugfilter der beiden Abgasturbolader durch automatische Rückschlagventile vermieden werden. Für den Fall, daß einer der beiden Abgasturbolader ausfällt, kann in Ergänzung zur abgasseitigen Teilung der Brennkraftmaschine in zwei Zylindergruppen eine entsprechende ladeluftseitige Zweiteilung herbeigeführt werden, so daß der verbleibende Abgasturbolader und das Hilfs-Ladegebläse in einer Art Parallelbetrieb arbeiten.

Aus dem Dokument US 4 453 381 A ist eine aufgeladene Brennkraftmaschine mit einem durch Schaltventile einem Abgasturbolader ladeluftseitig in Serie vorschaltbaren Hilfskompressor mit einem ständig laufenden Hilfsantrieb bekannt, der zugleich mit einem Schwungrad gekoppelt ist, um kurzzeitigen Schwächen im Abgasaufkommen der Brennkraftmaschine entgegenzuwirken. Im Normalbetrieb der Brennkraftmaschine bezieht der Kompressor des Abgasturboladers seine Luft bei geschlossenen Schaltventilen über ein automatisches Rückschlagventil unmittelbar aus der Umgebung.

Die Vorveröffentlichung WO 99 17008 A beschreibt ein Aufladesystem für Viertakt-Brennkraftmaschinen mit einem kleinen elektromotorisch angetriebenen Kompressor, dessen Luftauslaß über ein Rückschlagventil an den Lufteinlaß eines, Abgasturboladers anschließbar ist, dessen Abgasturbine durch einen von Maschinensignalen gesteuerten Elektromotor bedarfsweise unterstützt wird.

Eine aufgeladene Brennkraftmaschine der eingangs angeführten Art ist bereits aus der Publikation EP 0 492 272 A bekannt. Bei dieser Brennkraftmaschine ist als gesonderter Motor für das Vorgebläse und als Hauptmotor je ein Rotationskolben-Dieselmotor mit niedriger Verdichtung bei stark ungleicher Leistungsdimensionierung von Hauptmotor und kleinerem Vorgebläsemotor verwendet und zum Antrieb des Vorgebläses zusätzlich ein elektrischer Startermotor vorgesehen. Von einem Leistungsmelder des Hauptmotors ist wenigstens ein zweistufiger Abgasturbolader parallel zu der Serienschaltung des Vorgebläses und des von der Abgasturbine angetriebenen Ladegebläses zuschaltbar. Damit kann man den Vorgebläsemotor entsprechend seinem prozentualen Anteil an der Ladeleistung verkleinern. Bei der Zuschaltbarkeit lediglich eines zweistufigen Abgasturboladers halbiert sich die notwendige Größe des Vorgebläsemotors und bei der gestaffelten Zuschaltbarkeit zweier zweistufiger Abgasturbolader drittelt sich die notwendige Größe des Vorgebläsemotors. Aussagen über das oben angesprochene Problem des sogenannten Pumpens beim zeitlich versetzten Hinzuschalten von Abgasturboladern sind in der Druckschrift nicht auszumachen. Es ist aber ein Verlust von komprimierter Luft aus dem Bereich des Ladeluftsammlers durch ein Rückwärtsströmen von Ladeluft in jedem der zuschaltbaren Abgasturbolader zu vermeiden. Dies gilt insbesondere für Dieselmotoren mit einer für ihre Selbstzündung kritischen Druckschwelle.

Der Erfindung liegt die Aufgabe zugrunde, bei einer aufgeladenen Brennkraftmaschine in Verbindung mit einer Leistungssteigerung, einem verbesserten Beschleunigungsverhalten im Anlaufbereich und einem übergangsharmonischen Betriebsspektrum von sehr niedriger Drehzahl bei Teillast und Vollast bis zu hoher Drehzahl bei Teillast und Vollast ein gestaffeltes Zu- und Abschalten von Abgasturboladern ohne die genannten Pumpeffekte zu ermöglichen.

Diese Aufgabe wird erfindungsgemäß an einer Brennkraftmaschine der eingangs angeführten Art dergestalt gelöst, daß sämtliche Abgasturbolader eingangsseitig an ihrem Verdichter über je eine Ventileinrichtung eine Leitungsverbindung zum Ausgang des Ladegebläses haben, ein Rechner mit abgespeichertem Anforderungsprofil zum alleinigen Freischalten der Ventileinrichtung des im Staffelbetrieb hinzutretenden jeweils einen Abgasturboladers vorgesehen ist und sämtliche Ventileinrichtungen zum gegenläufigen Umsteuern zwischen der durch das Ladegebläse komprimierten Zuluft und der Umgebungsluft in Abhängigkeit von der Drehzahl ihres Abgasturboladers und dem Ladeluft-Arbeitsdruck eingerichtet sind.

Damit wird das Ladegebläse nicht mehr nur zur Bekämpfung des sogenannten Turbolochs beim Anlaufen der Brennkraftmaschine und zur Kombination der Vorteile eines Verdrängerladers mit denen eines Strömungsladers eingesetzt, sondern auch zur Sicherung der Vorwärtsströmung in jedem der zeitlich versetzt hinzugeschalteten Abgasturbolader. Insbesondere bei einer Feinaufteilung des Betriebsspektrums der Brennkraftmaschine mittels zahlreicher Abgasturbolader kann man außer mit einer kleinen Bauform der Abgasturbolader zugleich mit einem kleinen Ladegebläse auskommen. Als gesonderter Motor des kleinen Ladegebläses läßt sich ein Elektromotor verwenden, der seine Antriebsenergie aus einer elektrischen Fahrzeugbatterie bezieht. Ein solcher Motor läuft reaktionsschneller an als ein gesonderter Verbrennungsmotor oder eine Getriebeverbindung zum aufzuladenden Hauptmotor. Dementsprechend verkürzt sich die Zeitspanne, in der vom Ladegebläse komprimierte Zuluft durch den jeweiligen Abgasturbolader hindurchzudrücken ist. Mit der Erfindung erzielte Vorteile bestehen aber insbesondere auch darin, daß infolge der Aufteilung des Betriebsspektrums der Brennkraftmaschine mittels der Abgasturbolader beim Antrieb eines Kraftfahrzeugs auf einige Wechselgetriebestufen verzichtet werden kann, sich die Reihenfolge der Abgasturbolader in ihrer gestaffelten Inbetriebnahme hinsichtlich einer gleichmäßigen Abnutzung leicht ändern läßt und eine Störung in einem der Abgasturbolader durch dessen vorprogrammierte Ausklammerung überbrückbar ist.

Ein aufgrund der in den Unteransprüchen angegebenen Erfindungsausgestaltungen bevorzugtes Ausführungsbeispiel der Erfindung ist in der blockschaltbildartigen Zeichnung dargestellt und wird im folgenden näher beschrieben.

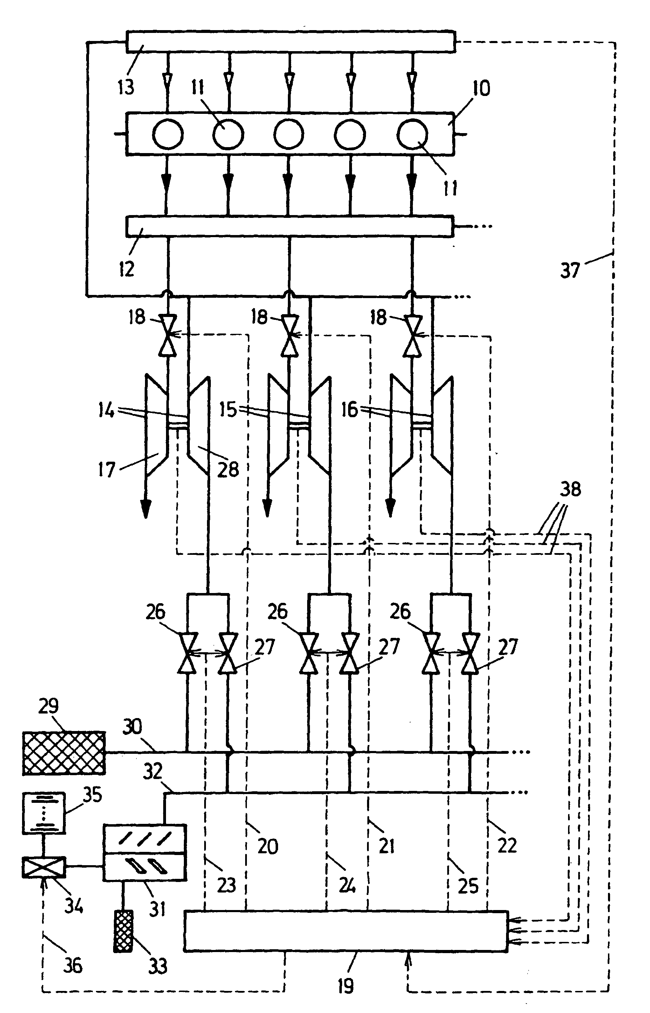

Die Zeichnung zeigt als Brennkraftmaschine 10 einen Fünfzylindermotor, um anzudeuten, daß es bei der Aufladeeinrichtung keine konzeptionelle Bindung an die Anzahl der mit Ladeluft zu versorgenden Zylinder 11 gibt. Durch je eine punktiert auslaufende Leitung am Abgassammler 12 der Brennkraftmaschine 10 und am Ladeluftsammler 13 der Brennkraftmaschine 10 ist kenntlich gemacht, daß außer den drei symbolisch wiedergegebenen Abgasturboladern 14, 15 und 16 noch viele weitere gestaffelt an- und abschaltbare Abgasturbolader zur Aufteilung des Betriebsspektrums der Brennkraftmaschine 10 vorgesehen sein können. In der Praxis wird man sich zumeist auf sechs bis zehn baugleiche Abgasturbolader beschränken, was einen Kompromiß zwischen der Feinheit der Aufteilung des Betriebsspektrums der Brennkraftmaschine 10 und dem baulichen Aufwand für die Aufladeeinrichtung der Brennkraftmaschine 10 darstellt.

An den Zylindern 11 der Brennkraftmaschine 10 sind durch helle Pfeilspitzen die Ladeluftströme und durch dunkle Pfeilspitzen die Abgasströme ausgewiesen. Zwischen dem Abgassammler 12 der Brennkraftmaschine 10 und der Abgasturbine 17 jedes Abgasturboladers 14, 15, 16 usw. ist ein Abgasventil 18 eingefügt, welches von dem mit einem abgespeicherten Anforderungsprofil ausgestatteten Rechner 19 individuell steuerbar ist. In der Zeichnung sind die betreffenden Steuerleitungen 20, 21 und 22 durch gestrichelte Linien wiedergegeben. Weitere derartige Steuerleitungen 23, 24 und 25 des Rechners 19 führen zu den ein Umgebungsluftventil 26 und ein Zuluftventil 27 enthaltenden Ventileinrichtungen am Lufteinlaß der Verdichter 28 der Abgasturbolader 14, 15 und 16. Das Abgasventil 18 ist vorzugsweise wie das Umgebungsluftventil 26 und das Zuluftventil 27 als Proportionalventil ausgebildet, um einen breiten Regelbereich vorzuhalten. Innerhalb jeder Ventileinrichtung sind dessen Umgebungsluftventil 26 und dessen Zuluftventil 27 derart miteinander gekoppelt, daß das Umgebungsluftventil 26 öffnet, wenn das Zuluftventil 27 schließt, und umgekehrt das Umgebungsluftventil 26 schließt, wenn das Zuluftventil 27 öffnet. Sämtliche Umgebungsluftventile 26 haben eine von einem Luftfilter 29 kommende gemeinsame Versorgungsleitung 30, wogegen sämtliche Zuluftventile 27 in die zum Ausgang des Ladegebläses 31 führende Leitungsverbindung 32 einbezogen sind.

Das eingangsseitig mit einem eigenen Luftfilter 33 ausgestattete Ladegebläse 31 wird von einem relativ kleinen Elektromotor 34 angetrieben, der seine Antriebsenergie aus einer elektrischen Fahrzeugbatterie 35 bezieht. Dabei ist zu bedenken, daß der über die Steuerleitung 36 gleichfalls vom Rechner 19 an- und abschaltbare Elektromotor 34 immer nur kurzfristig aktiviert wird, bis ein Rückwärtsströmen von Ladeluft über den jeweils hinzukommenden Abgasturbolader ausgeschlossen ist. In den Betriebspausen des Ladegebläses 31 während des Betriebs der Brennkraftmaschine 10 kann die Fahrzeugbatterie 35 leicht von einem an die Brennkraftmaschine 10 angeschlossenen Generator nachgeladen werden. Zudem stehen inzwischen überaus leistungsstarke Fahrzeugbatterien 35 zur Verfügung, daß selbst bei recht großen Brennkraftmaschinen 10 die Anlaufschwäche eines hinzuzuschaltenden Abgasturboladers 14, 15 oder 16 durch das Ladegebläse 31 äußerst zügig kompensiert werden kann.

Der mit einem abgespeicherten Anforderungsprofil ausgestattete Rechner 19 erhält über die Signalleitung 37 Drucksignale vom Ladeluftsammler 13 und über die Signalleitungen 38 Drehzahlsignale von den Abgasturboladern 14, 15, 16 usw., womit sämtliche Ventileinrichtungen 26,27 zum gegenläufigen Umsteuern zwischen der durch das Ladegebläse 31 komprimierten Zuluft und der Umgebungsluft in Abhängigkeit von der Drehzahl ihres Abgasturboladers und dem Ladeluft-Arbeitsdruek eingerichtet sind.

Vorzugsweise ist der Betrieb des Ladegebläses 31 über den Rechner 19 beim Hochfahren der Brennkraftmaschine 10 auf einen Startbereich des in der Folge aller gestaffelt eingesetzter Abgasturbolader 14, 15, 16 usw. jeweils betroffenen einen Abgasturboladers beschränkt, was das Ladegebläse 31 schont und die elektrische Fahrzeugbatterie 35 entlastet. Zur Stabilisierung des im Ladeluftsammler 13 angestrebten Gleichdrucks durch Verminderung schlagartiger Abschaltvorgänge ist außerdem beim Herunterfahren der Brennkraftmaschine 10 der Betrieb des Ladegebläses 31 über den Rechner 19 auf einen dem Startbereich entsprechenden Bereich des in der Schaltfolge aller gestaffelt eingesetzter Abgasturbolader 14, 15, 16 usw. jeweils betroffenen einen Abgasturboladers beschränkt.

Die Vorteile der beschriebenen Aufladeeinrichtung sind besonders augenfällig, wenn die Brennkraftmaschine 10 als Dieselmotor mit einer auf etwa 8 : 1 stark reduzierten Verdichtung ausgebildet ist. Die eigentliche Brennkraftmaschine 10 läßt sich dann bei gleicher Leistung enorm verkleinern. Die zahlreichen Abgasturbolader 14, 15, 16 usw. erbringen leicht das relativ hohe fehlende Ladegewicht, wobei das in erweiterter Funktion als Ladeluftstütze eingesetzte und als Verdränger-Kompressor arbeitende Ladegebläse 31 ebenfalls erheblich verkleinert werden kann.

## Patentansprüche

1. Aufgeladene Brennkraftmaschine mit einem Abgassammler (12) und einem Ladeluftsammler (13) jeweils für sämtliche Brennräume, mehreren in Abhängigkeit von der Leistung der Brennkraftmaschine gestaffelt mit ihrer Abgasturbine (17) an den Abgassammler (12) anschaltbaren und abschaltbaren Abgasturboladern (14,15,16) und mit einem dem Verdichter (28) eines der Abgasturbolader (14,15,16) in Serie vorgeschalteten, von einem gesonderten Motor (34) angetriebenen Ladegebläse (31), **dadurch gekennzeichnet, daß** sämtliche Abgasturbolader (14, 15,16) eingangsseitig an ihrem Verdichter (28) über je eine Ventileinrichtung (26,27) eine Leitungsverbindung (32) zum Ausgang des Ladegebläses (31) haben, ein Rechner (19) mit abgespeichertem Anforderungsprofil zum alleinigen Freischalten der Ventileinrichtung (26,27) des im Staffelbetrieb hinzutretenden jeweils einen Abgasturboladers vorgesehen ist und sämtliche Ventileinrichtungen (26,27) zum gegenläufigen Umsteuern zwischen der durch das Ladegebläse (31) komprimierten Zuluft und der Umgebungsluft in Abhängigkeit von der Drehzahl ihres Abgasturboladers und dem Ladeluft-Arbeitsdruck eingerichtet sind.

2. Brennkraftmaschine nach Anspruch 1, **dadurch gekennzeichnet, daß** bei ihrem Hochfahren der Betrieb des Ladegebläses (31) über den Rechner (19) auf einen Startbereich des in der Schaltfolge aller gestaffelt eingesetzter Abgasturbolader (14,15,16) jeweils betroffenen einen Abgasturboladers beschränkt ist.

3. Brennkraftmaschine nach Anspruch 2, **dadurch gekennzeichnet, daß** bei ihrem Herunterfahren der Betrieb des Ladegebläses (31) über den Rechner (19) auf einen dem Startbereich entsprechenden Bereich des in der Schaltfolge aller gestaffelt eingesetzter Abgasturbolader (14,15,16)jeweils betroffenen einen Abgasturboladers beschränkt ist.

4. Brennkraftmaschine nach einem der Ansprüche 1 bis 3, **dadurch gekennzeichnet, daß** jedem Abgasturbolader (14,15, 16) zu seiner individuellen Inbetriebnahme ein von dem Rechner (19) steuerbares Abgasventil (18) zugeordnet ist, welches wie das Zuluftventil (27) und das Umgebungsluftventil (26) als Proportionalventil ausgebildet ist.

5. Brennkraftmaschine nach einem der Ansprüche 1 bis 4, **dadurch gekennzeichnet, daß** zur gleichmäßigen Abstaffelung ihres Betriebsbereichs sechs bis zehn baugleiche Abgasturbolader (14,15,16) vorgesehen sind.

6. Brennkraftmaschine nach einem der Ansprüche 1 bis 5, **dadurch gekennzeichnet, daß** der gesonderte Motor (34) des Ladegebläses (31) seine Antriebsenergie aus einer elektrischen Fahrzeugbatterie (35) bezieht.

7. Brennkraftmaschine nach einem der Ansprüche 1 bis 6, **dadurch gekennzeichnet, daß** sie als Dieselmotor mit einer auf etwa 8 : 1 stark reduzierten Verdichtung ausgebildet ist.

## Claims

1. A supercharged internal-combustion engine with an exhaust-gas manifold (12) and a charge-air manifold (13) for all the combustion chambers in each case, [with] a plurality of exhaust-gas turbochargers (14, 15, 16), which are capable of being connected and disconnected with their exhaust-gas turbine (17) to the exhaust-gas manifold (12) in a staggered manner which is dependent upon the performance of the internal-combustion engine, and with a supercharging blower (31), which is arranged in series upstream of the compressor (28) of one of the exhaust-gas turbochargers (14, 15, 16) and which is driven by a separate motor (34), **characterized in that** at the inlet end on their compressor (28) all the exhaust-gas turbochargers (14, 15, 16) have a line connexion (32) to the outlet of the supercharging blower (31) by way of one valve device (26, 27) in each case, a computer (19) with a stored requirement profile is provided for exclusively freeing the valve device (26, 27) of one respective exhaust-gas turbocharger coming into the staggered operation, and all the valve devices (26, 27) are set up for mutual reversing between the supplied air compressed by the supercharging blower (31) and the ambient air in a manner dependent upon the rotational speed of their exhaust-gas turbocharger and the operating pressure of the charge air.

2. An internal-combustion engine according to Claim 1, **characterized in that,** as its power increases, the operation of the supercharging blower (31) is limited by way of the computer (19) to a starting range of one exhaust-gas turbocharger involved in each case in the connexion sequence of all the exhaust-gas turbochargers (14, 15, 16) which come into use in a staggered manner.

3. An internal-combustion engine according to Claim 2, **characterized in that,** as its power drops, the operation of the supercharging blower (31) is limited by way of the computer (19) to a range - corresponding to the starting range - of one exhaust-gas turbocharger involved in each case in the connexion sequence of all the exhaust-gas turbochargers (14, 15, 16) which come into use in a staggered manner.

4. An internal-combustion engine according to one of Claims 1 to 3, **characterized in that** an exhaust-gas valve (18), which is controllable by the computer (19) and which like the supplied-air valve (27) and the ambient-air valve (26) is designed in the form of a proportional valve, is associated with each exhaust-gas turbocharger (14, 15, 16) with respect to its individual coming into operation.

5. An internal-combustion engine according to one of Claims 1 to 4, **characterized in that,** for the uniform staggering of its operating range, from six to ten exhaust-gas turbochargers (14, 15, 16) of similar design are provided.

6. An internal-combustion engine according to one of Claims 1 to 5, **characterized in that** the separate motor (34) of the supercharging blower (31) takes its driving energy from an electric vehicle battery (35).

7. An internal-combustion engine according to one of Claims 1 to 6, **characterized in that** it is designed in the form of a diesel engine with a compression sharply reduced to approximately 8 : 1.

## Revendications

1. Moteur à combustion interne suralimenté comprenant un collecteur (12) des gaz d'échappement et un collecteur (13) d'air de suralimentation commun pour toutes les chambres de combustion, comprenant plusieurs turbocompresseurs (14, 15, 16) qui, par leur turbine (17) à gaz d'échappement, peuvent être connectés au collecteur (12) des gaz d'échappement et déconnectés de ce dernier d'une manière échelonnée en fonction de la puissance du moteur à combustion interne, et comprenant un suralimenteur (31) monté en série en amont du compresseur (28) d'un des turbocompresseurs (14, 15, 16) et entraîné par un moteur (34) distinct, **caractérisé en ce que** chacun des turbocompresseurs (14, 15, 16) possède, du côté d'entrée de son compresseur (28), une liaison (32) par conduite vers la sortie du suralimenteur (31) par l'intermédiaire d'un dispositif (26, 27) respectif à soupapes, il est prévu un ordinateur (19) à profil d'exigence mémorisé pour libérer uniquement le dispositif (26, 27) à soupapes du turbocompresseur respectif à connecter pendant le fonctionnement échelonné, et tous les dispositifs (26, 27) à soupapes sont conçus pour être commutés en opposition entre de l'air d'alimentation comprimé par le suralimenteur (31) et de l'air ambiant, en fonction de la vitesse de rotation de leur turbocompresseur et de la pression de travail de l'air de suralimentation.

2. Moteur à combustion interne suivant la revendication 1, **caractérisé en ce que**, lors d'une augmentation de sa puissance, le fonctionnement du suralimenteur (31) est limité, par l'intermédiaire de l'ordinateur (19), à une plage de démarrage du turbocompresseur respectivement concerné dans la séquence de commutation de tous les turbocompresseurs (14, 15, 16) utilisés de manière échelonnée.

3. Moteur à combustion interne suivant la revendication 2, **caractérisé en ce que**, lors d'une réduction de sa puissance, le fonctionnement du suralimenteur (31) est limité par l'intermédiaire de l'ordinateur (19) à une plage, correspondant à la plage de démarrage, du turbocompresseur respectivement concerné dans la séquence de commutation de tous les turbocompresseurs (14, 15, 16) utilisés de manière échelonnée.

4. Moteur à combustion interne suivant l'une des revendications 1 à 3, **caractérisé en ce qu'**une soupape (18) de gaz d'échappement pouvant être commandée par l'ordinateur (19) est associée à chaque turbocompresseur (14, 15, 16) pour sa mise en service individuelle, soupape qui, comme la soupape (27) d'air d'alimentation et la soupape (26) d'air ambiant, est réalisée sous forme de soupape proportionnelle.

5. Moteur à combustion interne suivant l'une des revendications 1 à 4, **caractérisé en ce qu'**il est prévu, pour l'échelonnement uniforme de sa plage de fonctionnement, six à dix turbocompresseurs (14, 15, 16) de conception identique.

6. Moteur à combustion interne suivant l'une des revendications 1 à 5, **caractérisé en ce que** le moteur (34) séparé du suralimenteur (31) tire son énergie d'entraînement d'une batterie (35) électrique du véhicule.

7. Moteur à combustion interne suivant l'une des revendications 1 à 6, **caractérisé en ce qu'**il est réalisé sous forme de moteur diesel ayant un taux de compression fortement réduit, à environ 8:1.
